# EUROPEAN PATENT SPECIFICATION

(11) **EP 4 369 092 B1**
(45) Date of publication and mention of the grant of the patent: **28.10.2026**
(21) Application number: 23218708.8
(22) Date of filing: 14.11.2011
(51) Int. Cl.: G03B 3/02, G03B 3/10, G03B 13/36, H04N 23/54, H04N 23/55, H04N 23/57

(54) **CAMERA MODULE**
KAMERAMODUL
MODULE DE CAMÉRA

(30) Priority: 09.12.2010 KR 20100125731; 13.12.2010 KR 20100127053
(43) Date of publication of application: 15.05.2024
(62) Document number(s) of the earlier application(s) in accordance with Art. 76 EPC: 20206217.0 / 3 806 442; 11846302.5 / 2 649 786
(73) Proprietor: LG Innotek Co., Ltd., Seoul 07796 (KR)
(72) Inventor: LEE, Jungsik, 07796 Seoul (KR)
(74) Representative: M. Zardi & Co S.A.

(56) References cited:
- EP-A2- 2 124 431
- KR-A- 20100 022 692
- KR-A- 20100 062 657
- KR-A- 20100 124 135
- US-A1- 2010 007 973

## Description

### [Technical Field]

The teachings in accordance with exemplary embodiments of this invention relate generally to a camera module, and more particularly to a camera module configured to have a tolerance to an electrostatic damage.

### [Background Art]

Generally, a compact small-sized camera module is applied to various multimedia fields including notebook type personal computers, camera phones, PDAs (Personal Digital Assistants), smart phones and toys, and to image input equipment including monitoring cameras and information terminals.

A PCB (Printed Circuit Board) of a camera module is manufactured being embedded with various electronic elements, and the electronic elements are generally configured with integrated modules on the PCB. The integrated module used for mobile terminals is exposed to severe radio interference, which in turn results in abnormal function to the electronic elements forming the integrated module.

Under the circumstance where the radio interference causes an abnormal function to the electronic elements forming the integrated module, a metal shield can is generally utilized to prevent the radio interference. The metal shield serves to alleviate the radio interference ill affecting the electronic elements and to protect the electronic elements against an outside shock.

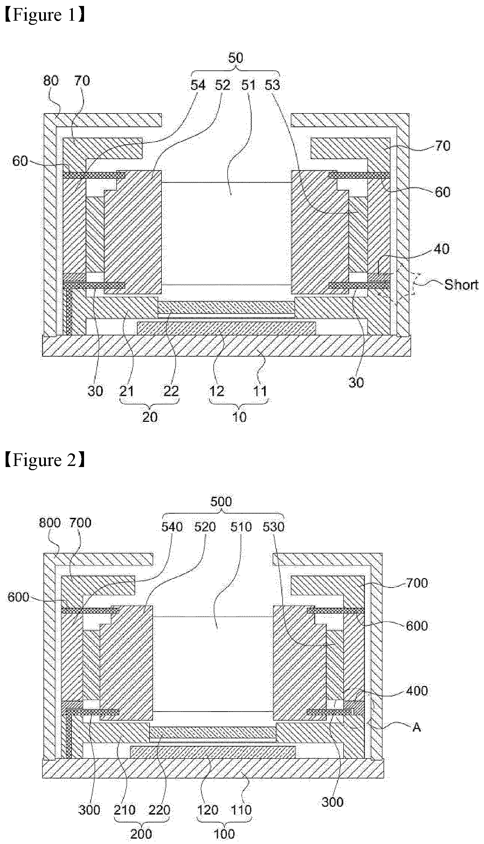

FIG.1 is a schematic view for explaining a problem faced by a conventional camera module. Referring to FIG. 1, the conventional camera module includes a PCB (11) mounted with an image sensor (12), a base (20) on the PCB (11), upper and lower spring plates (30, 60), a spacer (40), a cover (70), a lens assembly and a lens actuator (50) and a shield can (80).

The lower spring plate (30) in the conventional camera module that is electrically connected to the PCB (11) forms a layer and may be protruded to outside. The shield can (80) is generally provided with a conductive metal material, such that the lower spring plate (30) and the shield can (80) may be short-circuited, as illustrated in FIG.1. Furthermore, a short-circuit may be generated between the lower spring plate (30) and a conductive structure even in a camera module free from the shield can (80), if the structure assembled for the camera module is configured with conductive materials KR 2010 0062657 A (CHABIO & DIOSTECH CO LTD [KR]) 10 June 2010 (2010-06-10), KR 2010 0022692 A (JAEYOUNG SOLUTEC CO LTD [KR]) 3 March 2010 (2010-03-03), KR 2010 0124135 A (CHABIO & DIOSTECH CO LTD [KR]) 26 November 2010 (2010-11-26) and US 2010/007973 A1 (SATA NORIFUMI [JP] ET AL) 14 January 2010 (2010-01-14) disclose relevant camera modules.

### [Disclosure]

### [Technical Problem]

The present invention is to provide a camera module directed to solve the aforementioned problems or disadvantages by preventing the camera module from being short-circuited with outside conductive materials.

Technical problems to be solved by the present invention are not restricted to the above-mentioned, and any other technical problems not mentioned so far will be clearly appreciated from the following description by skilled in the art.

### [Solution to Probelem]

An object of the invention is to solve at least one or more of the above problems and/or disadvantages in whole or in part and to provide at least the advantages described hereinafter. In order to achieve at least the above objects, in whole or in part, and in accordance with the purposes of the invention, as embodied and broadly described, and in one general aspect of the present invention, there is provided a camera module, the camera module comprising: a PCB; an image sensor mounted on the PCB and formed with an image pickup device; a base mounted on the PCB and including a plated portion formed at a lower center with an opening mounted with an IR (infrared) filter, and accommodated with a connection lead therein, and corner pillar portions each erected at a corner portion of the plated portion; a lower spring plate formed with a conductive material, and connected to the connection lead of the base for coupling with an upper surface of the plated portion; a spacer arranged on an upper surface of the lower spring plate and forming a staircase structure by a rib wrapping a periphery of the lower spring plate to supportively apply a pressure to the lower spring plate; a lens actuator including a bobbin elastically supported by the lower spring plate and accommodated inside a lens assembly, and a yoke wrapping the bobbin and coupled among the corner pillar portions of the base and stacked at an upper surface of the spacer; an upper spring plate coupled to an upper surface of the lens actuator to supportively apply a pressure to the lens actuator; and a cover attached to an upper surface of the upper spring plate and formed thereon with a hole.

Preferably, the camera module is further comprising a shield can of an enclosure formed thereon with a hole and a bottom-opened inner space, accommodating the lens actuator at the inner space, and secured at a bottom end to an upper surface of the PCB.

Preferably, the shield can and the PCB are fixed by an adhesive.

Preferably, the adhesive is a conductive epoxy.

Preferably, the lower spring plate is formed with an upwardly-protruding yoke terminal to supply an electric power to the lens actuator.

In another general aspect of the present invention, there is provide a camera module, the camera module comprising: a PCB; an image sensor mounted on the PCB and formed with an image pickup device; a base mounted on the PCB and including a plated portion formed at a lower center with an opening mounted with an IR (infrared) filter, and corner pillar portions each erected at a corner portion of the plated portion; a lower spring plate formed with a conductive material, and coupled to an upper surface of the plated portion of the base; a lens actuator including a bobbin elastically supported by the lower spring plate and accommodated inside a lens assembly, and a yoke wrapping the bobbin and coupled to an upper surface of the base; an upper spring plate coupled to an upper surface of the lens actuator to supportively apply a pressure to the lens actuator; and a cover arranged on an upper surface of the upper spring plate, coupled to a corner pillar portion of the base and formed thereon with a hole, wherein an upper surface of the plated portion of the base is formed with an accommodation structure inwardly staircased for accommodating the lower spring plate.

Preferably, the camera module is further comprising a shield can of an enclosure formed thereon with a hole and a bottom-opened inner space, accommodating the lens actuator at the inner space, and secured at a bottom end to an upper surface of the PCB.

Preferably, the shield can and the PCB are fixed by an adhesive.

Preferably, the adhesive is a conductive epoxy.

Preferably, the camera module is further comprising a spacer between the lower spring plate and the lens actuator.

Preferably, the lower spring plate is formed with an upwardly-protruding yoke terminal to supply an electric power to the lens actuator.

### [Advantageous Effects of Invention]

A camera module according to the present invention has an advantageous effect in that an occurrence of short-circuit with outside conductive material is prevented to alleviate damage to the camera module caused by short-circuit through structural change to a spacer, thereby dispensing with formation of additional parts.

### [Brief Description of Drawings]

The teachings of the present invention can be readily understood by considering the following detailed description in conjunction with the accompanying drawings, in which:
FIG. 1 is a cross-sectional explaining a problem of a conventional camera module;
FIG. 2 is a cross-sectional view of a camera module according to a first exemplary embodiment of the present invention;
FIG. 3 is a schematic view illustrating a coupled state between a staircase-formed spacer and a lower spring plate;
FIG. 4 is a schematic view illustrating a coupled state between a staircase-formed base of a camera module and a lower spring plate according to a second exemplary embodiment of the present invention; and
FIG. 5 is a schematic view illustrating the lower spring plate of FIGS. 3 and 4.

### [Best Mode for Carrying out the Invention]

The following description is not intended to limit the invention to the form disclosed herein. Consequently, variations and modifications commensurate with the following teachings, and skill and knowledge of the relevant art are within the scope of the present invention. The embodiments described herein are further intended to explain modes known of practicing the invention and to enable others skilled in the art to utilize the invention in such, or other embodiments and with various modifications required by the particular application(s) or use(s) of the present invention.

The disclosed embodiments and advantages thereof are best understood by referring to FIGS. 1-5 of the drawings, like numerals being used for like and corresponding parts of the various drawings. Other features and advantages of the disclosed embodiments will be or will become apparent to one of ordinary skill in the art upon examination of the following figures and detailed description. It is intended that all such additional features and advantages be included within the scope of the disclosed embodiments, and protected by the accompanying drawings. Further, the illustrated figures are only exemplary and not intended to assert or imply any limitation with regard to the environment, architecture, or process in which different embodiments may be implemented. Accordingly, the described aspect is intended to embrace all such alterations, modifications, and variations that fall within the scope and novel idea of the present invention.

It will be understood that the terms "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof. That is, the terms "including", "includes", "having", "has", "with", or variants thereof are used in the detailed description and/or the claims to denote non-exhaustive inclusion in a manner similar to the term "comprising".

Furthermore, "exemplary" is merely meant to mean an example, rather than the best. It is also to be appreciated that features, layers and/or elements depicted herein are illustrated with particular dimensions and/or orientations relative to one another for purposes of simplicity and ease of understanding, and that the actual dimensions and/or orientations may differ substantially from that illustrated. That is, in the drawings, the size and relative sizes of layers, regions and/or other elements may be exaggerated or reduced for clarity. Like numbers refer to like elements throughout and explanations that duplicate one another will be omitted. Now, the present invention will be described in detail with reference to the accompanying drawings.

Words such as "thereafter," "then," "next," etc. are not intended to limit the order of the processes; these words are simply used to guide the reader through the description of the methods.

It will be understood that when an element is referred to as being "connected" or "coupled" to another element, it can be directly connected or coupled to the other elements or intervening elements may be present. In contrast, when an element is referred to as being "directly connected" or "directly coupled" to another element, there are no intervening elements present. As used herein, the term "and/or" includes any and all combinations of one or more of the associated listed items and may be abbreviated as "/".

It will be understood that, although the terms first, second, etc. may be used herein to describe various elements, these elements should not be limited by these terms. These terms are only used to distinguish one element from another. For example, a first region/layer could be termed a second region/layer, and, similarly, a second region/layer could be termed a first region/layer without departing from the teachings of the disclosure.

The terminology used herein is for the purpose of describing particular embodiments only and is not intended to be limiting of the general inventive concept. As used herein, the singular forms "a", "an" and "the" are intended to include the plural forms as well, unless the context clearly indicates otherwise.

Now, the camera module according to exemplary embodiments of the present invention will be described in detail with reference to the accompanying drawings.

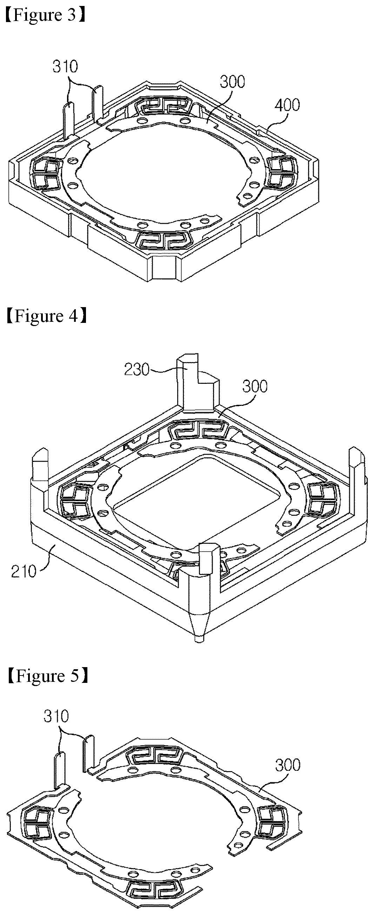

FIG.2 is a cross-sectional view of a camera module according to a first exemplary embodiment of the present invention, FIG. 3 is a schematic view illustrating a coupled state between a staircase-formed spacer and a lower spring plate, FIG.4 is a schematic view illustrating a coupled state between a staircase-formed base of a camera module and a lower spring plate according to a second exemplary embodiment of the present invention, and FIG. 5 is a schematic view illustrating the lower spring plate of FIGS. 3 and 4.

Referring to FIG.2, a camera module according to a first exemplary embodiment of the present invention includes a PCB (110), an image sensor (120), a base (200), upper and lower spring plates (300, 600), a spacer (400), a lens assembly and a lens actuator (500), a cover (700), and a shield can (800).

The PCB (110) is mounted with the image sensor (120), and coupled to the base (200) and a lower surface of the can (800). The image sensor (120) is mounted with an image pickup device for converting light incident through a lens formed at a lens assembly (510) positioned at an upper surface of the image sensor (120) to an electrical signal.

The base (200) mounted on the PCB (110) is formed at a lower center thereof with an opening mounted with an IR filter (220) filtering an infrared, and includes a plated portion accommodating a connection lead, and a corner pillar portion (230) perpendicularly formed at a corner portion of the plated portion. The lower spring plate (300) formed with a conductive material is connected to a connection lead of the base (200) and coupled to an upper surface of the plated portion.

The spacer (400) is arranged at an upper surface of the lower spring plate (300), formed with a stair-cased structure by a rib encompassing a periphery of the lower spring plate (300) to supportively apply a pressure to the lower spring plate (300). The conductive lower spring plate (300) is accommodated by the stair-cased structure formed by the rib (see 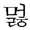 ?in FIG. 2) to prevent the conductive material from being exposed to an external surface of the spacer (400), whereby the lower spring plate (300) and an outside conductive material from being short-circuited. The difference created by the structure can be more distinctively shown in comparison with the prior art of FIG. 1. In case of structure of FIG.1, a periphery of the lower spring plate (30) is structurally exposed to an external surface of the spacer (40), the structure of which can generate an occurrence of short-circuit with an outside conductive material, whereas the rib structure of spacer (400) according to the present invention has an effect of completely removing the occurrence of short-circuit.

Now, referring to FIGS. 2 and 3, the lower spring plate (300) is formed with an upwardly protruding yoke terminal (310). The yoke terminal (310) is inserted into a connection hole of a yoke (540) at the lens actuator (500), and the lower spring plate (300) is electrically connected to the PCB (110) through a connection lead inside the base (210) to allow the lens actuator (500) to be provided with an electric power.

The lens actuator (500) includes a lens assembly (510), a bobbin (520) accommodating the lens assembly (510), a coil wound on a periphery of the bobbin (520) and the yoke (540), which are elements for vertically driving the lens assembly (510). The upper spring plate (600) is coupled to an upper surface of the lens actuator (500) to supportively apply a pressure to the lens actuator (500). The cover (700) is attached to an upper surface of the upper spring plate (600) and is formed at an upper center thereof with a center hole.

The shield can (800), an enclosure formed at a upper center thereof with a hole and a bottom-opened inner space, accommodates the lens actuator (500) at the inner space, and fixed at a bottom end to an upper surface of the PCB (110) by an adhesive. The adhesive may include a conductive epoxy, but is not limited thereto.

### [Mode for Invention]

FIG.4 is a schematic view illustrating a coupled state between a staircase-formed base of a camera module and a lower spring plate according to a second exemplary embodiment of the present invention, and FIG. 5 is a schematic view illustrating the lower spring plate formed with an upwardly protruding yoke terminal according to another exemplary embodiment of the present invention.

An upper surface of a plated portion of a base (210) according to another exemplary embodiment of the present invention is formed with an accommodation structure inwardly formed with staircases to accommodate the lower spring plate (300) (see 'A' of FIG.2). In a case the lower spring plate (300) is accommodated in the accommodation structure, the conductive lower spring plate (300) is accommodated by the staircases at an upper surface of the plated portion of the base (210) to structurally prevent from exposing to an external surface of the base (210), whereby the lower spring plate (300) is prevented from being short-circuited with an external conductive material.

The difference created by the structure can be more distinctively shown in comparison with the prior art of FIG.1. In case of structure of FIG.2, a periphery of the lower spring plate (30) is structurally exposed to an external surface of the base (21), the structure of which can generate an occurrence of short-circuit with an outside conductive material, whereas the inwardly staircased accommodation structure according to the present invention has an effect of completely removing the occurrence of short-circuit.

Now, referring to FIG. 5, the lower spring plate (300) is formed with an upwardly protruding yoke terminal (310). The yoke terminal (310) is inserted into a connection hole of a yoke (540) at the lens actuator (500), and the lower spring plate (300) is electrically connected to a circuit of the PCB (110) to allow the lens actuator (500) to be provided with an electric power.

That is, the second exemplary embodiment of the present invention is comprising a stair-cased structure formed at the base (210), and other structures make no big difference from those of the first exemplary embodiment, such that an overlapped explanation is omitted.

The previous description of the present invention is provided to enable any person skilled in the art to make or use the invention. Various modifications to the invention will be readily apparent to those skilled in the art, and the generic principles defined herein may be applied to other variations without departing from the scope of the invention. Thus, the invention is not intended to limit the examples described herein, but is to be accorded the widest scope consistent with the principles and novel features disclosed herein.

### [Industrial Applicability]

The camera module according to the present invention has an industrial applicability in that the novel idea of the present invention can be applied to a small-sized camera module using a voice coil motor as an automatic focus adjusting unit.

## Claims

1. A camera module, comprising: a PCB (11); an image sensor (12) mounted on the PCB and formed with an image pickup device;
an IR filter (220);
a base (210) mounted on the PCB and comprising a plated portion formed at a center with an opening and coupled with the IR filter (220), and corner pillar portions each erected at a corner portion of the plated portion;
a lower spring plate (300) formed with a conductive material and coupled with an upper surface of the plated portion of the base (210); and
a lens actuator (500) comprising a bobbin (520) elastically supported by the lower spring plate (300) and a lens assembly (510) accommodated in the bobbin (520),
wherein the lower spring plate (300) comprises a downwardly protruding terminal electrically connected to the PCB (110) and configured to supply an electric power to the lens actuator (500),
wherein the base (210) comprises a hole,
the camera module **characterised in that**
the terminal of the lower spring plate (300) passes through the hole of the base (210),
wherein the upper surface of the plated portion of the base (210) is formed with an accommodation structure inwardly stair-cased for accommodating the lower spring plate (300), and
wherein the lower spring plate (300) is accommodated by the staircases at the upper surface of the plated portion of the base (210) to structurally prevent from exposing to an external surface of the base (210), whereby the lower spring plate (300) is prevented from being short-circuited with an external conductive material.

2. The camera module of claim 1, wherein the lens actuator (500) comprises a yoke (540) wrapping the bobbin (520) and coupled to the upper surface of the base (210).

3. The camera module of any one of claims 1 to 2, comprising an upper spring plate (600) coupled to an upper surface of the lens actuator (500) to supportively apply a pressure to the lens actuator (500).

4. The camera module of claim 3, comprising a cover (700) attached to an upper surface of the upper spring plate (600) and formed at an upper center thereof with a center hole.

5. The camera module of claim 1, comprising a shield can (800) of an enclosure formed thereon with a hole and a bottom-opened inner space, accommodating the lens actuator (500) at an inner space, and secured at a bottom end to an upper surface of the PCB (110).

6. The camera module of claim 5, wherein the shield can (800) and the PCB (110) are fixed by an adhesive.

7. The camera module of claim 6, wherein the adhesive is a conductive epoxy.

8. The camera module of any one of claims 1 to 7, wherein the lens actuator (500) comprises a coil wound on a periphery of the bobbin (520).

9. The camera module of claim 1, wherein the lower spring plate (300) is electrically connected to a circuit of the PCB (110) to allow the lens actuator (500) to be provided with an electric power.

10. A smart phone comprising the camera module of any one of claims 1 to 9.

## Patentansprüche

1. Kameramodul, umfassend: eine PCB (11); einen Bildsensor (12), der an der PCB montiert ist und mit einer Bildaufnahmevorrichtung gebildet ist;
einen IR-Filter (220);
eine Basis (210), die an der PCB montiert ist und einen plattierten Abschnitt, der in einem Zentrum mit einer Öffnung gebildet und mit dem IR-Filter (220) gekoppelt ist, und Ecksäulenabschnitte umfasst, die jeweils an einem Eckabschnitt des plattierten Abschnitts aufgerichtet sind;
eine untere Federplatte (300), die mit einem leitenden Material gebildet und mit einer oberen Oberfläche des plattierten Abschnitts der Basis (210) gekoppelt ist; und
einen Linsenaktuator (500) umfassend einen Spulenkörper (520), der durch die untere Federplatte (300) elastisch getragen ist, und eine Linsenanordnung (510), die in dem Spulenkörper (520) aufgenommen ist,
wobei die untere Federplatte (300) einen nach unten vorstehenden Anschluss umfasst, der mit der PCB (110) elektrisch verbunden und dazu konfiguriert ist, dem Linsenaktuator (500) eine elektrische Leistung zuführen,
wobei die Basis (210) ein Loch umfasst,
wobei das Kameramodul **dadurch gekennzeichnet ist, dass** der Anschluss der unteren Federplatte (300) durch das Loch der Basis (210) hindurchgeht,
wobei die obere Oberfläche des plattierten Abschnitts der Basis (210) mit einer Aufnahmestruktur gebildet ist, die nach innen treppenförmig ausgebildet ist, um die untere Federplatte (300) aufzunehmen, und
wobei die untere Federplatte (300) durch die Treppen an der oberen Oberfläche des plattierten Abschnitts der Basis (210) aufgenommen ist, um ein Exponieren gegenüber einer äußeren Oberfläche der Basis (210) strukturell zu verhindern, wodurch verhindert wird, dass die untere Federplatte (300) mit einem externen leitenden Material kurzgeschlossen wird.

2. Kameramodul nach Anspruch 1, wobei der Linsenaktuator (500) ein Joch (540) umfasst, das den Spulenkörper (520) umhüllt und mit der oberen Oberfläche der Basis (210) gekoppelt ist.

3. Kameramodul nach einem der Ansprüche 1 bis 2, umfassend eine obere Federplatte (600), die mit einer oberen Oberfläche des Linsenaktuators (500) gekoppelt ist, um unterstützend einen Druck auf den Linsenaktuator (550) aufzubringen.

4. Kameramodul nach Anspruch 3, umfassend eine Abdeckung (700), die an einer oberen Oberfläche der oberen Federplatte (600) angebracht und in einem oberen Zentrum davon mit einem Zentrumsloch gebildet ist.

5. Kameramodul nach Anspruch 1, umfassend eine darauf gebildete Abschirmdose (800) eines Gehäuses mit einem Loch und einem unten offenen Innenraum, die den Linsenaktuator (500) in einem Innenraum aufnimmt und die an einem unteren Ende an einer oberen Oberfläche der PCB (110) befestigt ist.

6. Kameramodul nach Anspruch 5, wobei die Abschirmdose (800) und die PCB (110) durch ein Haftmittel fixiert sind.

7. Kameramodul nach Anspruch 6, wobei das Haftmittel ein leitendes Epoxidharz ist.

8. Kameramodul nach einem der Ansprüche 1 bis 7, wobei der Linsenaktuator (500) eine Spule umfasst, die auf einen Umfang des Spulenkörpers (520) gewickelt ist.

9. Kameramodul nach Anspruch 1, wobei die untere Federplatte (300) mit einem Schaltkreis der PCB (110) elektrisch verbunden ist, um zu erlauben, dass der Linsenaktuator (500) mit einer elektrischen Leistung versorgt wird.

10. Smartphone umfassend das Kameramodul nach einem der Ansprüche 1 bis 9.

## Revendications

1. Module de caméra comprenant : une carte de circuit imprimé (11) ; un capteur d'image (12) monté sur la carte de circuit imprimé et pourvu d'un dispositif de capture d'image ; un filtre IR (220) ; une base (210) montée sur la carte de circuit imprimé et comprenant une partie en plaque présentant, en son centre, une ouverture et couplée au filtre IR (220), et des parties de pilier d'angle s'étendant chacune depuis une partie d'angle de la partie en plaque ; une plaque à ressort inférieure (300) constituée d'un matériau conducteur et couplée à une surface supérieure de la partie en plaque de la base (210) ; et un actionneur de lentille (500) comprenant un porte-bobine (520) supporté élastiquement par la plaque à ressort inférieure (300) et un ensemble de lentilles (510) logé dans le porte-bobine (520),
dans lequel la plaque à ressort inférieure (300) comprend une borne faisant saillie vers le bas et électriquement connectée à la carte de circuit imprimé (110), et configurée pour fournir une alimentation électrique à l'actionneur de lentille (500),
dans lequel la base (210) comprend un trou,
le module de caméra étant **caractérisé en ce que** la borne de la plaque à ressort inférieure (300) passe à travers le trou de la base (210),
dans lequel la surface supérieure de la partie en plaque de la base (210) est formée avec une structure de logement formée en escaliers vers l'intérieur pour recevoir la plaque à ressort inférieure (300), et
dans lequel la plaque à ressort inférieure (300) est reçue dans les escaliers au niveau de la surface supérieure de la partie en plaque de la base (210) de manière à empêcher structurellement la plaque à ressort inférieure (300) d'être exposée à une surface externe de la base (210), empêchant ainsi la plaque à ressort inférieure (300) d'être mise en court-circuit avec un matériau conducteur externe.

2. Module de caméra selon la revendication 1,
dans lequel l'actionneur de lentille (500) comprend une culasse (540) enveloppant le porte-bobine (520) et couplée à la surface supérieure de la base (210).

3. Module de caméra selon l'une quelconque des revendications 1 à 2, comprenant une plaque à ressort supérieure (600) couplée à une surface supérieure de l'actionneur de lentille (500) pour appliquer une pression de maintien à l'actionneur de lentille (500).

4. Module de caméra selon la revendication 3, comprenant un couvercle (700) fixé à une surface supérieure de la plaque à ressort supérieure (600) et présentant, en son centre supérieur, un trou central.

5. Module de caméra selon la revendication 1, comprenant un capot de blindage (800) formant une enceinte pourvue d'un trou et d'un espace intérieur ouvert vers le bas, dans lequel est logé l'actionneur de lentille (500), et fixé au niveau d'une extrémité inférieure à une surface supérieure de la carte de circuit imprimé (110).

6. Module de caméra selon la revendication 5, dans lequel le capot de blindage (800) et la carte de circuit imprimé (110) sont fixés par un adhésif.

7. Module de caméra selon la revendication 6, dans lequel l'adhésif est une résine époxy conductrice.

8. Module de caméra selon l'une quelconque des revendications 1 à 7, dans lequel l'actionneur de lentille (500) comprend une bobine enroulée autour d'une périphérie du porte-bobine (520).

9. Module de caméra selon la revendication 1, dans lequel la plaque à ressort inférieure (300) est électriquement connectée à un circuit de la carte de circuit imprimé (110) pour permettre à l'actionneur de lentille (500) d'être alimenté en énergie électrique.

10. Téléphone intelligent comprenant le module de caméra selon l'une quelconque des revendications 1 à 9.
